Europäisches Patentamt

European Patent Office

Office européen des brevets

(11) Veröffentlichungsnummer : **0 079 476**
**B1**

(12) # EUROPÄISCHE PATENTSCHRIFT

(45) Veröffentlichungstag der Patentschrift :
28.08.85

(51) Int. Cl.⁴ : **E 04 F 11/04, B 60 R 3/02,**
**B 64 C 1/24**

(21) Anmeldenummer : **82109684.9**

(22) Anmeldetag : **20.10.82**

(54) Schwenkbare Treppe, insbesondere für Fahrzeuge.

(30) Priorität : **13.11.81 DE 3145157**

(43) Veröffentlichungstag der Anmeldung :
**25.05.83 Patentblatt 83/21**

(45) Bekanntmachung des Hinweises auf die Patenterteilung : **28.08.85 Patentblatt 85/35**

(84) Benannte Vertragsstaaten :
**AT BE CH DE FR GB IT LI LU NL SE**

(56) Entgegenhaltungen :
DE-A- 2 318 614
DE-B- 1 683 721
US-A- 1 805 829
US-A- 3 213 962
US-A- 4 014 486

(73) Patentinhaber : **DUEWAG Aktiengesellschaft**
**Duisburger Strasse 145**
**D-4150 Krefeld 11 (DE)**

(72) Erfinder : **Coenen, Karl**
**Am Buttendick 23**
**D-4230 Wesel (DE)**
Erfinder : **Gössler, Klaus**
**Friedhofstrasse 3**
**D-4300 Essen (DE)**
Erfinder : **Patil, Mohan**
**Büdericher Strasse 7**
**D-4156 Willich 1 (DE)**

## Beschreibung

Die Erfindung betrifft eine schwenkbare Treppe, insbesondere für Fahrzeuge, die einen mit Trittplatten oder Sprossen versehenen, in einer ortsfesten Schwenklagerung mit horizontaler Drehachse gehaltenen und über mindestens ein Tragmittel mit einem ortsfesten Traglager in Verbindung stehenden Treppenkörper aufweist, wobei das Tragmittel zur Aufnahme sämtlicher in begehbarer Stellung des Treppenkörpers aus dessen Eigengewicht und Begehung resultierenden Zugkräfte vorgesehen ist.

Durch die DE-A-23 18 614 ist eine als Einstiegsverkleidung bezeichnete Treppe der gattungsgemäßen Art bekannt. Die Einstiegsverkleidung weist einen Treppenkörper mit trittstufenartigen Profilierungen auf, der in einer ortsfesten Schwenklagerung mit horizontaler Drehachse gehalten ist. Über eine Arretierung, die als Kette oder Seil gestaltet sein kann und mit dem Treppenkörper und einem ortsfesten Traglager in Verbindung stehen muß, wird der Treppenkörper in seiner begehbaren Stellung frei über dem Boden getragen ; die Arretierung dient somit als Tragmittel zur Aufnahme sämtlicher in begehbarer Stellung des Treppenkörpers auftretenden Zugkräfte.

Zum Stand der Technik (US-A-3 213 962) gehört ferner eine spezielle Flugzeugtür, deren in geöffneter Stellung begehbares Türblatt in seinen Abmessungen größer ist als die lichte Öffnung des Türrahmens und in geschlossener Stellung von innen gegen den Türrahmen anliegt. Dieses Türblatt ist in wesentlicher Abweichung von der gattungsgemäßen Treppe nicht mit einer ortsfesten Schwenklagerung und über ein auf Zug belastetes Tragmittel mit einem ortsfesten Traglager verbunden, sondern über einen aufwendigen, eine Mehrzahl von Hebeln, Anschlägen und Führungen umfassenden, überwiegend auf Biegung beanspruchten Mechanismus vielachsig im Raum verschwenkbar, wobei ein Teil dieses Mechanismus und daran sowie am Türblatt angelenkte Hebel zusammen ein Handgeländer bilden.

Der Erfindung liegt die Aufgabe zugrunde, eine schwenkbare Treppe der gattungsgemäßen Art auf besonders einfache Weise und unter Verwendung nur weniger Bauteile so zu gestalten, daß der Treppenkörper in seiner begehbaren Stellung möglichst stabil und frei von einem elastischen Absenken bei seiner Belastung aufgehängt und unfallsicher benutzbar sein soll.

Diese Aufgabe wird erfindungsgemäß dadurch gelöst, daß das Tragmittel aus zwei durch ein Gelenk miteinander gekoppelten Hebeln besteht, im Sinne eines Handgeländers ausgebildet ist und dazu ein Handgeländerteil aufweist, das einerseits mit dem Gelenk der Hebel und andererseits dreh- und längsverschiebbar mit einem Zwischenhebel verbunden ist, der am Treppenkörper gelagert und an dem in begehbarer Stellung des Treppenkörpers unteren Hebel des Tragmittels ebenfalls dreh- und längsverschiebbar angeschlossen ist.

Eine besonders kompakte, insbesondere für beengte Einbauverhältnisse günstige Ausbildung der Treppe bei optimal greifbarem Handgeländer wird nach einer Ausgestaltung der Erfindung dadurch erzielt, daß das Handgeländerteil in hochgeschwenkter Stellung des Treppenkörpers in Ebene der dann zusammengefalteten Hebel des Tragmittels liegt und in der begehbaren Stellung des Treppenkörpers parallel zu diesem, in bequem greifbarer Höhe angeordnet ist.

Zum Schaffen möglichst einfacher dreh- und längsverschiebbarer Verbindungen des Handgeländerteils und des unteren Hebels mit dem Zwischenhebel sieht eine weitere Ausführungsform der Erfindung vor, daß das Handgeländerteil und der untere Hebel des Tragmittels jeweils einen Lagerzapfen aufweisen, die in entsprechend zugeordnete schlitzförmige Führungen des Zwischenhebels eingreifen.

Um im Gelenkbereich des Tragmittels ein Hochschwenken des Treppenkörpers erschwerende Totpunktstellungen sicher zu vermeiden, wird gemäß einer nächsten Ausgestaltung der Erfindung vorgeschlagen, daß das Gelenk der Hebel einen in einer jeweiligen Bohrung des unteren Hebels und des Handgeländerteils angeordneten Drehzapfen aufweist, der in einem Langloch des oberen Hebels geführt ist.

Für einen besonders bequemen und der unfallsicheren Benutzung der Treppe dienlichen Zugang liegt es ferner im Wesen der Erfindung, daß zwischen der in begehbarer Stellung untersten Trittplatte oder Sprosse des Treppenkörpers und dem Boden ein einer Tritthöhe entsprechender freier Abstand besteht.

Um im Hinblick auf eine gewichtlich günstige Auslegung des Tragmittels die davon aufzunehmenden Zugkräfte möglichst klein zu halten, ist nach einer letzten Ausführungsform der Erfindung vorgesehen, daß der in begehbarer Stellung des Treppenkörpers untere Hebel des Tragmittels möglichst nahe am unteren Ende des Treppenkörpers angreift.

Die mit dem Gegenstand nach der Erfindung erzielbaren Vorteile liegen insbesondere darin, daß der auf einfache Weise durch zwei Hebel frei über dem Boden aufgehängte Treppenkörper stets eine definierte begehbare Stellung einnimmt und darin stabil gehalten ist. Diese stabile, d. h. weitestgehend unelastische Halterung und die zusammen mit dem Handgeländerteil als Geländer dienenden beiden Hebel erbringen größtmögliche Sicherheit bei der Benutzung der Treppe.

Ein Ausführungsbeispiel der Erfindung ist in der Zeichnung dargestellt und wird im folgenden näher beschrieben. Es zeigen

Figur 1 eine schwenkbare Treppe in ihrer begehbaren Stellung,

Figur 2 die Treppe nach Fig. 1 in hochgeschwenkter Stellung, wobei ein Treppenkörper 1 der leichteren Übersicht halber nur umrißlich gezeichnet ist,

Figur 3 die Einzelheit Z in Fig. 1, im vergrößerten Maßstab.

Die dargestellte schwenkbare Treppe ist für ein Fahrzeug zum Transport von Personen auf Flughäfen bestimmt, dessen heb- und senkbarer Aufbau an den Gebäuden und den Flugzeugen in der Regel stufenlos betreten wird; insoweit ist die Treppe insbesondere für Notfälle und als Hilfseinstieg bei Reinigungs- und Wartungsarbeiten vorgesehen.

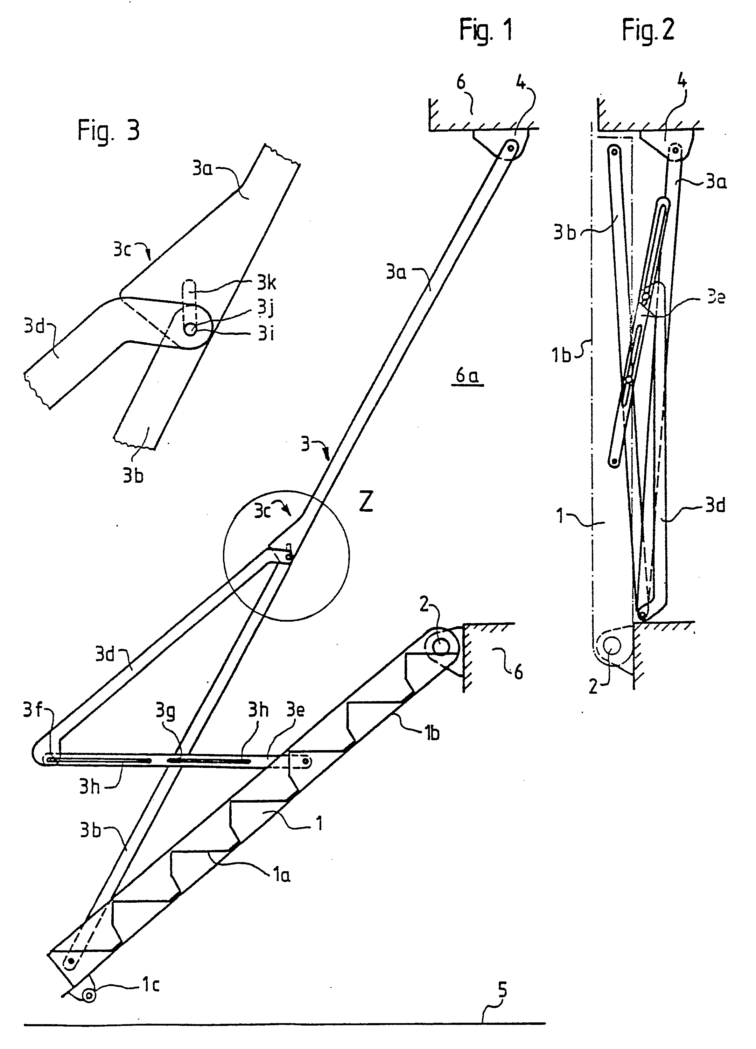

Gemäß der Zeichnung besteht die Treppe im wesentlichen aus einem mit Trittplatten 1a versehenen Treppenkörper 1 und einem insgesamt mit dem Bezugszeichen 3 gekennzeichneten Tragmittel. Der Treppenkörper 1 ist in einer ortsfesten Schwenklagerung 2 gehalten, die sich unterhalb einer Türöffnung 6a an dem angedeuteten Fahrzeugaufbau 6 befindet. Wie aus Fig. 2 ersichtlich, dient der an seiner Außenfläche 1b im Sinne eines Türblattes ausgebildete Treppenkörper 1 auch zum Verschließen der Türöffnung 6a. Im übrigen ist der Treppenkörper 1 biegesteif und hier zusätzlich verwindungssteif ausgeführt, so daß eine Einzelanordnung des Tragmittels 3 ausreicht.

Der Treppenkörper 1 ist in seiner begehbaren Stellung (siehe Fig. 1) über einen unteren Hebel 3b und einen oberen Hebel 3a des Tragmittels 3 an einem ortsfesten Traglager 4 des Fahrzeugaufbaus 6 aufgehängt. Die durch ein im einzelnen weiter hinten beschriebenes Gelenk 3c miteinander gekoppelten Hebel 3a und 3b sind für eine Aufnahme sämtlicher, aus der Eigenlast des Treppenkörpers 1 und dessen auftretender Belastung resultierenden Zugkräfte ausgebildet; der danach getroffene freie Abstand zwischen dem Treppenkörper 1 und dem Boden 5 ermöglicht in der Stellung nach Fig. 1 einen Fahrbetrieb ohne Beschädigung der Treppe. Vorsichtshalber ist an der Außenseite 1b des Treppenkörpers 1 noch eine Rolle 1c angebracht.

Im Hinblick auf eine weitestgehend unfallsichere Benutzung der Treppe ist das Tragmittel 3 außerdem im Sinne eines Handgeländers ausgebildet und weist dazu ein Handgeländerteil 3d auf. Dieses Handgeländerteil 3d ist einerseits mit dem Gelenk 3c und andererseits dreh- und längsverschiebbar mit einem Zwischenhebel 3e verbunden, der am Treppenkörper 1 gelagert und an dem unteren Hebel 3b des Tragmittels 3 ebenfalls dreh- und längsverschiebbar angeschlossen ist. Für die beiden vorbezeichneten dreh- und längsverschiebbaren Anschlüsse sind das Handgeländerteil 3d mit einem Lagerzapfen 3f und der Zwischenhebel 3e mit einem Lagerzapfen 3g versehen, wobei die Zapfen 3f und 3g in entsprechend zugeordnete Führungen 3h des Zwischenhebels 3e eingreifen. Durch die derartige Anlenkung wird erreicht, daß das Handgeländerteil 3d in der hochgeschwenkten Stellung des Treppenkörpers 1 (siehe Fig. 2) platzsparend in Ebene der dabei zusammengefalteten Hebel 3a, 3b liegt und in der begehbaren Stellung (Fig. 1) parallel zum Treppenkörper 1 in bequem greifbarer Höhe angeordnet ist.

Im Ausführungsbeispiel wird mithin das Handgeländer hauptsächlich durch den oberen Hebel 3a und das Handgeländerteil 3d gebildet; ergänzend sind der untere Hebel 3b und der Zwischenhebel 3e insbesondere für Kinder entsprechend nutzbar.

Wie insbesondere aus Fig. 3 ersichtlich, weist das Gelenk 3c einen Drehzapfen 3j auf, der in einer jeweiligen Bohrung 3i des unteren Hebels 3b und des Handgeländerteils 3d angeordnet und in einem Langloch 3k des oberen Hebels 3a geführt ist. Dadurch ist keine das Hochschwenken des Treppenkörpers 1 erschwerende Totpunktstellung möglich. Die im Bereich des Gelenkes 3c keilartige Gestaltung des oberen Hebels 3a erbringt einen stufenlosen Übergang zum Handgeländerteil 3d hin.

Die Bedienung der schwenkbaren Treppe kann von Hand oder mittels einer nicht dargestellten, über einen Seilzug auf den Treppenkörper 1 wirkenden Antriebsvorrichtung erfolgen.

**Patentansprüche**

1. Schwenkbare Treppe, insbesondere für Fahrzeuge, die einen mit Trittplatten (1a) oder Sprossen versehenen, in einer ortsfesten Schwenklagerung (2) mit horizontaler Drehachse gehaltenen und über mindestens ein Tragmittel (3) mit einem ortsfesten Traglager (4) in Verbindung stehenden Treppenkörper (1) aufweist, wobei das Tragmittel (3) zur Aufnahme sämtlicher in begehbarer Stellung des Treppenkörpers (1) aus dessen Eigengewicht und Begehung resultierenden Zugkräfte vorgesehen ist, dadurch gekennzeichnet, daß das Tragmittel (3) aus zwei durch ein Gelenk (3c) miteinander gekoppelten Hebeln (3a, 3b) besteht, im Sinne eines Handgeländers ausgebildet ist und dazu ein Handgeländerteil (3d) aufweist, das einerseits mit dem Gelenk (3c) der Hebel (3a, 3b) und andererseits dreh- und längsverschiebbar mit einem Zwischenhebel (3e) verbunden ist, der am Treppenkörper (1) gelagert und an dem in begehbarer Stellung des Treppenkörpers (1) unteren Hebel (3b) des Tragmittels (3) ebenfalls dreh- und längsverschiebbar angeschlossen ist.

2. Schwenkbare Treppe nach Anspruch 1, dadurch gekennzeichnet, daß das Handgeländerteil (3d) in hochgeschwenkter Stellung des Treppenkörpers (1) in Ebene der dann zusammengefalteten Hebel (3a, 3b) des Tragmittels (3) liegt und in der begehbaren Stellung des Treppenkörpers (1) parallel zu diesem, in bequem greifbarer Höhe angeordnet ist.

3. Schwenkbare Treppe nach Anspruch 1 oder 2, dadurch gekennzeichnet, daß das Handgeländerteil (3d) und der untere Hebel (3b) des Tragmittels (3) jeweils einen Lagerzapfen (3f bzw. 3g) aufweisen, die in entsprechend zugeordnete schlitzförmige Führungen (3h) des Zwischenhebels (3e) eingreifen.

4. Schwenkbare Treppe nach einem der Ansprüche 1 bis 3, dadurch gekennzeichnet, daß das Gelenk (3c) der Hebel (3a, 3b) einen in einer jeweiligen Bohrung (3i) des unteren Hebels (3b) und des Handgeländerteils (3d) angeordneten Drehzapfen (3j) aufweist, der in einem Langloch (3k) des oberen Hebels (3a) geführt ist.

5. Schwenkbare Treppe nach einem der Ansprüche 1 bis 4, dadurch gekennzeichnet, daß zwischen der in begehbarer Stellung untersten Trittplatte (1a) oder Sprosse des Treppenkörpers (1) und dem Boden (5) ein einer Tritthöhe entsprechender freier Abstand besteht.

6. Schwenkbare Treppe nach einem der Ansprüche 1 bis 5, dadurch gekennzeichnet, daß der in begehbarer Stellung des Treppenkörpers (1) untere Hebel (3b) des Tragmittels (3) möglichst nahe am unteren Ende des Treppenkörpers (1) angreift.

## Claims

1. Swivelling stairway, in particular for vehicles, having a stairway body (1) which is provided with steps (1a) or rungs, is held in a fixed pivot bearing (2) with a horizontal pivot axis and is connected via at least one support means (3) to a fixed support bearing (4), the support means (3) being provided to absorb all tensional forces resulting from the inherent weight of the stairway body (1) and from its being stepped on when it is in the position for use, characterised in that the support means (3) comprises two levers (3a, 3b) connected to each other by means of a hinge (3c), is designed in the manner of a handrail and has for this purpose a handrail portion (3d), which at one end is connected to the hinge (3c) of the levers (3a, 3b) and at the other end is connected rotationally and longitudinally displaceably to an intermediate lever (3e), which is mounted on the stairway body (1) and is similarly rotationally and longitudinally displaceably connected to the lever (3b) of the support means (3) occupying the lower position in the position for use of the stairway body (1).

2. Swivelling stairway according to claim 1, characterised in that, in the raised position of the stairway body (1), the handrail portion (3d) lies in the plane of the levers (3a, 3b) of the support means (3), which then are folded together, and when the stairway body (1) is in the position for use is arranged parallel to the stairway body (1) at a height where it can be easily gripped.

3. Swivelling stairway according to claim 1 or 2, characterised in that the handrail portion (3d) and the lower lever (3b) of the support means (3) each have a bearing journal (3f or 3g), which engages in suitably matching slot-shaped guides (3h) of the intermediate lever (3e).

4. Swivelling stairway according to any one of the claims 1 to 3, characterised in that the hinge (3c) of the levers (3a, 3b) has a pivot pin (3j), which is arranged in a respective bore (3i) in the lower lever (3b) and in the handrail portion (3d), and which is guided in a slot (3k) of the upper lever (3a).

5. Swivelling stairway according to any one of the claims 1 to 4, characterised in that, between the ground (5) and the step (1a) or rung of the stairway body (1) which occupies the lowest position in the position for use, there is an open space corresponding to the height of one step.

6. Swivelling stairway according to any one of the claims 1 to 5, characterised in that the lever (3b) of the support means (3) which occupies the lower position in the position for use of the stairway body (1), is applied as close as possible to the lower end of the stairway body (1).

## Revendications

1. Escalier pivotant, en particulier pour véhicules, qui présente un corps d'escalier (1) muni de marches (1a) ou d'échelons, retenu dans un montage pivotant à position fixe (2) à axe de rotation horizontal et relié, par l'intermédiaire d'au moins un moyen porteur (3), à un palier porteur à position fixe (4), le moyen porteur (3) étant prévu pour absorber toutes les forces de traction résultant, dans la position accessible du corps d'escalier (1), du poids mort de celui-ci et de la marche sur celui-ci, caractérisé en ce que le moyen porteur (3) est formé de deux leviers (3a, 3b) accouplés entre eux par une articulation (3c), est conçu au sens d'une main courante et présente à cet effet une partie de main courante (3d) qui est reliée, d'une part, à l'articulation (3c) des leviers (3a, 3b) et, d'autre part, avec possibilité de rotation et de coulissement longitudinal, à un levier intermédiaire (3e) qui est monté sur le corps d'escalier (1) et est relié, également de manière à pouvoir tourner et coulisser longitudinalement, au levier (3b) du moyen porteur (3) qui est le levier inférieur dans la position accessible du corps d'escalier (1).

2. Escalier pivotant selon la revendication 1, caractérisé en ce que la partie de main courante (3d), dans la position relevée du corps d'escalier (1), est située dans le plan des leviers (3a, 3b), alors repliés, du moyen porteur (3) et que dans la position accessible du corps d'escalier (1), elle est disposée parallèlement à celui-ci, à une hauteur commodément saisissable.

3. Escalier pivotant selon l'une quelconque des revendications 1 et 2, caractérisé en ce que la partie de main courante (3d) et le levier inférieur (3b) du moyen porteur (3) présentent chacun un tourillon (3f, 3g), ces tourillons s'engageant dans des guides en forme de fente (3h), convenablement adjoints, du levier intermédiaire (3e).

4. Escalier pivotant selon l'une quelconque des revendications 1 à 3, caractérisé en ce que l'articulation (3c) des leviers (3a, 3b) présente un pivot (3j) disposé dans une forure respective (3i) du levier inférieur (3b) et de la partie de main courante (3d) et qui est guidé dans un trou allongé (3k) du levier supérieur (3a).

5. Escalier pivotant selon l'une quelconque des revendications 1 à 4, caractérisé en ce qu'entre la marche (1a) ou l'échelon du corps d'escalier (1) qui se trouve tout en bas dans la position accessible et le sol (5) existe un espacement libre correspondant à une hauteur de marche.

6. Escalier pivotant selon l'une quelconque des revendications 1 à 5, caractérisé en ce que le levier (3b) du moyen porteur (3) qui est le levier inférieur dans la position accessible du corps d'escalier (1) s'applique aussi près que possible de l'extrémité inférieure du corps d'escalier (1).

Fig. 1

Fig. 2

Fig. 3